# EUROPEAN PATENT APPLICATION

(11) **EP 4 831 705 A1**
(43) Date of publication of application: **28.10.2026**
(21) Application number: 24906852.9
(22) Date of filing: 30.09.2024
(51) Int. Cl.: G02B 6/36

(54) **AUXILIARY TOOL**

(30) Priority: 19.12.2023 JP 2023213865
(71) Applicant: Fujikura Ltd., Tokyo 135-8512 (JP)
(72) Inventor: KANNO Shuhei, Sakura-shi, Chiba 285-8550 (JP)
(74) Representative: Plasseraud IP
(86) International application number: PCT/JP2024/034894
(87) International publication number: WO 2025/134463

(57) **Abstract**

An auxiliary tool includes a first housing, and a second housing configured to move relative to the first housing, the first housing includes a first opening that is open towards the adapter and through which distal ends of the plurality of connectors protrude towards the adapter, a second opening that is open toward the second housing, and a swing portion that is swingable, the swing portion includes a plurality of release portions that come into contact with contact portions of the plurality of connectors, respectively, in a case where the first housing is separated from the adapter, the plurality of release portions are disposed side by side in a parallel direction, a swing center of the swing portion is located at an end portion of the swing portion in the parallel direction, and in a case where the swing portion swings in a direction in which a distal end portion of the swing portion is separated from the contact portions of the connectors, a moment acts on the swing portion to swing the swing portion in a direction in which the connectors are removed from the adapter.

## Description

### Technical Field

The present invention relates to an auxiliary tool.
Priority is claimed on Japanese Patent Application No. 2023-213865, filed December 19, 2023, the content of which is incorporated herein by reference.

### Background Art

In recent years, connectors in data centers have been reduced in size and increased in density. In response to this, it is desired to improve work efficiency in connecting or disconnecting the connectors by collectively operating the plurality of connectors. For example, Patent Document 1 discloses a configuration in which it is possible to simultaneously disconnect four connectors.

### Citation List

### Patent Document

Patent Document 1: United States Patent Application, Publication No. 2019/285806

### Summary of Invention

### Problem to be Solved by the Invention

In the configuration of Patent Document 1, it is possible for the plurality of connectors to be collectively disconnected, but not to be collectively connected. Therefore, in order to perform collective connection, it is necessary for example, to prepare another tool. Using different tools during connection work and disconnection work leads to a decrease in work efficiency.

The present invention has been made in consideration of such circumstances, and an object thereof is to provide an auxiliary tool capable of collectively connecting and disconnecting a plurality of connectors.

### Means to Solve the Problem

In order to solve the above-described problem, according to aspect 1 of the present invention, an auxiliary tool is provided that is used to connect a plurality of connectors to an adapter, the auxiliary tool includes: a first housing; and a second housing configured to move relative to the first housing, in which the first housing includes a first opening that is open towards the adapter and through which distal ends of the plurality of connectors protrude towards the adapter, a second opening that is open toward the second housing, and a swing portion that is swingable. The swing portion includes a plurality of release portions that come into contact with contact portions of the plurality of connectors, respectively, in a case where the first housing is separated from the adapter, the plurality of release portions are disposed side by side in a parallel direction. A swing center of the swing portion is located at an end portion of the swing portion in the parallel direction. In a case where the swing portion swings in a direction in which a distal end portion of the swing portion is separated from the contact portions of the connectors, a moment acts on the swing portion to swing the swing portion in a direction in which the connectors are removed from the adapter.

According to aspect 2 of the present invention, the swing portion in the auxiliary tool according to aspect 1 may be integrally molded with the first housing.

According to aspect 3 of the present invention, the plurality of release portions in the auxiliary tool according to aspect 1 or 2 may protrude from the swing portion towards the second housing.

According to aspect 4 of the present invention, the second housing in the auxiliary tool according to any one of aspects 1 to 3 may include a plurality of pressing portions configured to press the plurality of connectors towards the adapter, and positions of the plurality of pressing portions are different from one another in a direction in which the first housing and the second housing move relative to one another.

According to aspect 5 of the present invention, the first housing in the auxiliary tool according to aspect 4 may include a plurality of engagement release portions configured to release contact between the plurality of pressing portions and the plurality of connectors.

### Effects of the Invention

According to the above-described aspect of the present invention, it is possible to provide an auxiliary tool capable of collectively connecting and disconnecting a plurality of connectors.

### Brief Description of Drawings

[FIG. 1] A plan view of a connector with an auxiliary tool according to the present embodiment.
[FIG. 2] A perspective view of the connector with the auxiliary tool of FIG. 1.
[FIG. 3] A perspective view of the first housing of FIG. 1.
[FIG. 4] A perspective view of the second housing of FIG. 1.
[FIG. 5] A cross-sectional view taken along line V-V of FIG. 4.
[FIG. 6] A perspective view showing a part of the optical connector of FIG. 1.
[FIG. 7] A cross-sectional view taken along line VII-VII of FIG. 1.
[FIG. 8] A view showing a state in which the connector with the auxiliary tool of FIG. 1 is connected to an adapter.
[FIG. 9] A perspective view of a vicinity of a pressing portion when the pressing portion of the present embodiment presses a connector.
[FIG. 10] A view showing a state following FIG. 9.
[FIG. 11] A view showing a state in which the connector with the auxiliary tool of the present embodiment is removed from the adapter.
[FIG. 12] A view showing a state following FIG. 11.

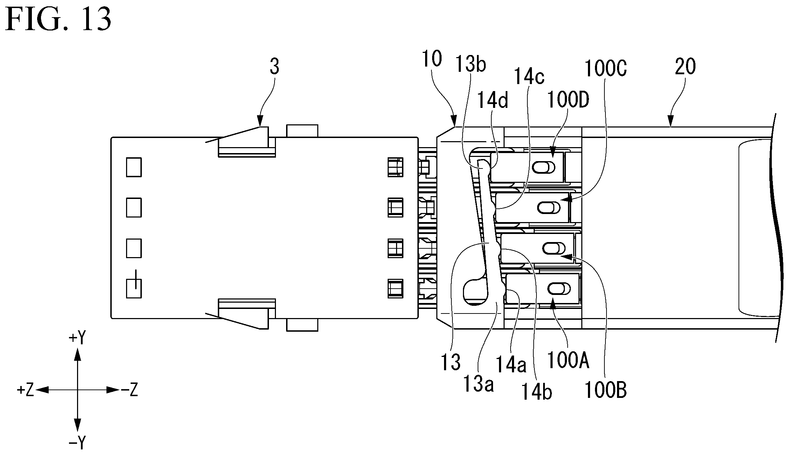

[FIG. 13] A view showing a state following FIG. 12.

### Description of Embodiments

Hereinafter, the auxiliary tool and the connector with the auxiliary tool according to the present embodiment is described with reference to the drawings.

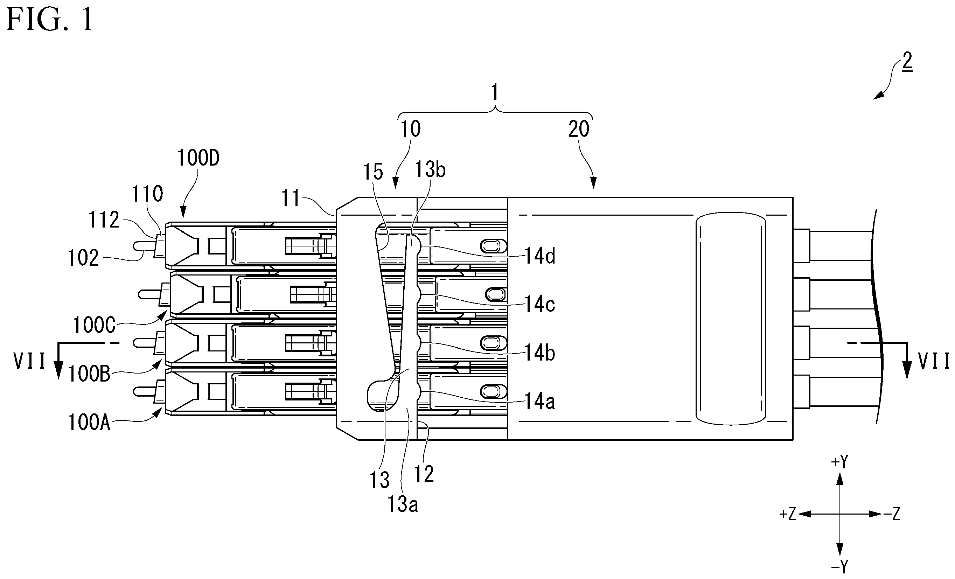

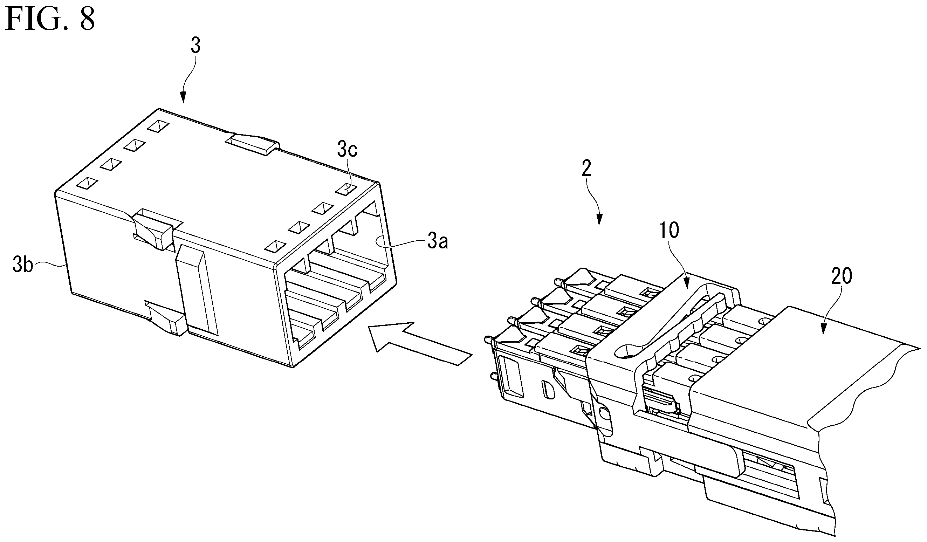

As shown in FIG. 1, a connector 2 with an auxiliary tool includes an auxiliary tool 1 and a plurality of connectors 100A to 100D. The auxiliary tool 1 includes a first housing 10 and a second housing 20. The auxiliary tool 1 is configured to collectively connect and disconnect the plurality of connectors 100A to 100D to and from an adapter 3 (see FIG. 8). A patch panel (not shown) deployed in a data center or the like often includes a large number of adapters 3 which are densely arranged. Each of the connectors 100A to 100D includes a ferrule 110. The ferrule 110 includes a connection end surface 112 on which an optical fiber is exposed.

### (Direction Definition)

In the present embodiment, a direction in which the first housing 10 and the second housing 20 are arranged is referred to as a "longitudinal direction Z". The longitudinal direction Z matches a direction in which a plurality of fiber holes 111 described below extend. A direction in which the plurality of connectors 100 (the plurality of connectors 100A to 100D) are arranged is referred to as a "parallel direction Y" or a "left-right direction". The parallel direction Y is orthogonal to the longitudinal direction Z. A direction orthogonal to both the longitudinal direction Z and the parallel direction Y is referred to as an "up-down direction X" or an "orthogonal direction". A side of the connection end surface 112 in the longitudinal direction Z (+Z side) is referred to as a "front side" or a "distal end side". A side opposite to the +Z side in the longitudinal direction Z (-Z side) is referred to as a "rear side" or a "base end side". One side (+X side) in the up-down direction X is referred to as an "upper side". A side opposite to the +X side in the up-down direction X (-X side) is referred to as a "lower side". One side (+Y side) in the parallel direction Y is referred to as a "left side". A side opposite to the +Y side in the parallel direction Y (-Y side) is referred to as a "right side". The up-down direction X however, need not match the vertical direction. A view from the up-down direction X is referred to as a "plan view", and a view from the parallel direction Y is referred to as a "side view".

The connector 2 with the auxiliary tool according to the present embodiment includes four connectors 100A to 100D. These connectors 100A to 100D may be referred to as a "first connector 100A", a second connector 100B, a third connector 100C, and a fourth connector 100D in an order from the -Y side to the +Y side. However, since the structures of the connectors 100A to 100D are the same, in a case where the structures are not distinguishable from one another, the connectors are simply referred to as a "connector 100". The number of connectors 100 included in the connector 2 with the auxiliary tool is not limited to four and may be changed as appropriate.

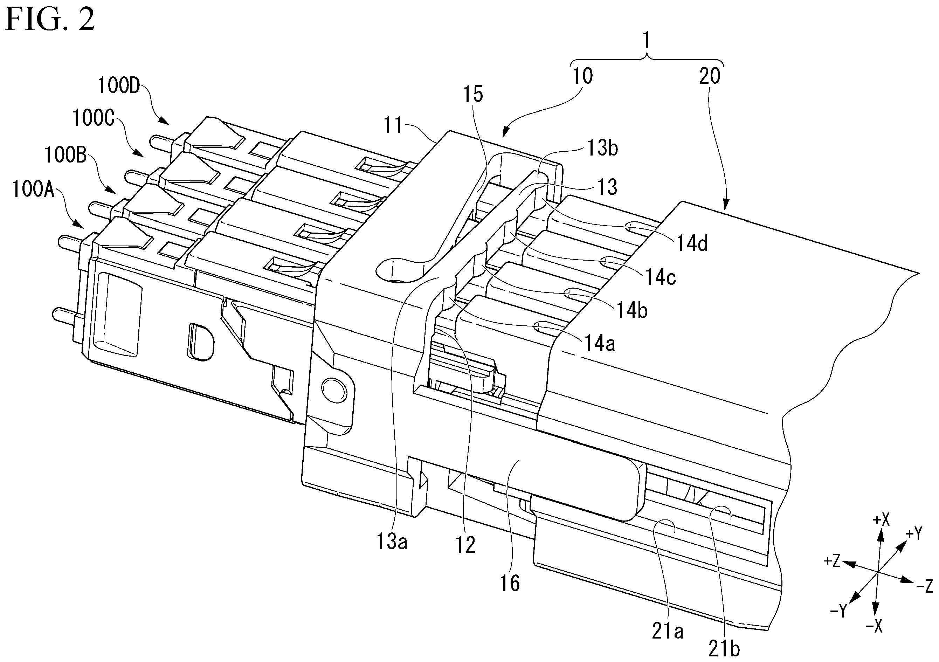

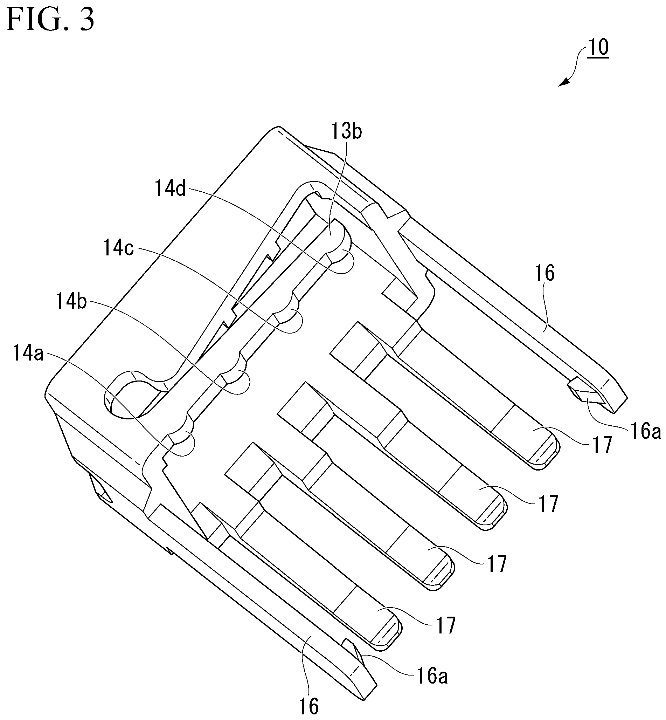

As shown in FIGS. 2 and 3, the first housing 10 includes a first opening 11, a second opening 12, a swing portion 13, a support surface 15, and two locking portions 16. The first opening 11 faces the distal end side. The plurality of connectors 100 (distal ends of the plurality of connectors 100) protrude from the first opening 11. The second opening 12 faces the second housing 20. The swing portion 13 extends in the parallel direction Y. The swing portion 13 may extend along the parallel direction Y (in parallel to the parallel direction Y) or may not extend along the parallel direction Y (in parallel to the parallel direction Y). The swing portion 13 is swingable around a swing center 13a. The swing portion 13 is elastically deformable in the longitudinal direction Z with the swing center 13a as a base point. In the present embodiment, the swing center 13a is located at an end portion (-Y side end portion) of the swing portion 13 in the parallel direction Y. An end portion (+Y side end portion) of the swing portion 13 opposite to the swing center 13a in the parallel direction Y is referred to as a "distal end portion 13b". In the present embodiment, the entire first housing 10 including the swing portion 13 is integrally molded. The swing center 13a is connected to a portion other than the swing portion 13 in the first housing 10. In a case where a force in the longitudinal direction Z is applied to the swing portion 13, the swing portion 13 is elastically deformed and swings around the swing center 13a.

A plurality of release portions 14a to 14d are formed in the swing portion 13. The number of the release portions 14a to 14d is the same as the number of the connectors 100 mounted on the auxiliary tool 1 (four in the present embodiment). The release portions 14a to 14d have a function of releasing the connection of the connector 100 to the adapter 3. Each of the release portions 14a to 14d corresponds to one connector 100. Hereinafter, these release portions may be referred to as a "first release portion 14a", a "second release portion 14b", a "third release portion 14c", and a "fourth release portion 14d".

The release portions 14a to 14d are disposed at intervals in the parallel direction Y. Positions of the release portions 14a to 14d in the parallel direction Y match positions of the connectors 100A to 100D in the parallel direction Y, respectively. The release portions 14a to 14d protrude from the swing portion 13 toward the second housing 20 on a base end side. The release portions 14a to 14d are convexly arc-shaped towards the base end side, as seen from the up-down direction X. However, the release portions 14a to 14d may have a triangular shape.

The support surface 15 is disposed to face the swing portion 13 in the longitudinal direction Z. The support surface 15 is inclined to face the distal end side (+Z side) as the distance from the swing center 13a increases in the parallel direction Y. The support surface 15 has a role of supporting the swing portion 13 in a case where the swing portion 13 swings toward the distal end side such that the distal end portion 13b is separated from the fourth connector 100D (a second contact portion 142 of the fourth connector 100D described below). It is possible for the presence of the support surface 15 to suppress the swing portion 13 from excessively swinging.

As shown in FIG. 3, the two locking portions 16 are disposed at intervals in the parallel direction Y. The locking portions 16 extend from the second opening 12 to the base end side. A locking protrusion 16a is formed at an end portion on the base end side of each of the locking portions 16. The locking protrusion 16a protrudes from the locking portion 16 toward an inner side in the parallel direction Y. A plurality of engagement release portions 17 are formed at a lower end portion of the first housing 10. The number of the engagement release portions 17 is the same as the number of the connectors 100 mounted on the auxiliary tool 1 (four in the present embodiment). The engagement release portion 17 extends from the second opening 12 to the base end side.

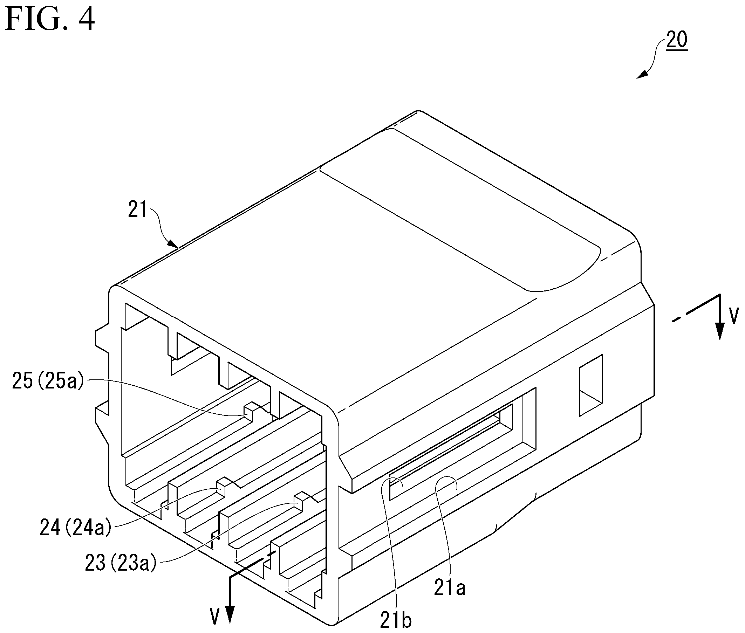

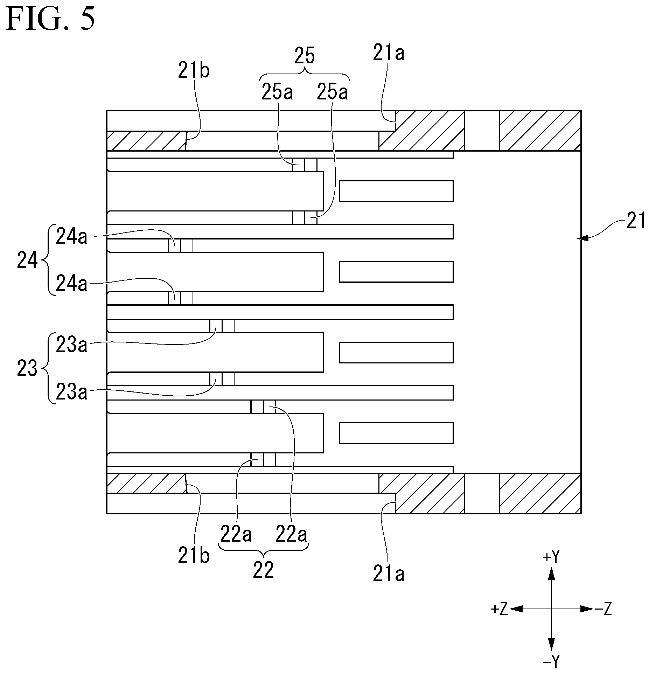

As shown in FIGS. 4 and 5, the second housing 20 includes a second main body portion 21 and a plurality of pressing portions 22 to 25. The second main body portion 21 is cylindrical with a rectangular cross section and extends in the longitudinal direction Z. The plurality of connectors 100 are inserted into the second main body portion 21. Two guide grooves 21a are formed in the second main body portion 21. The guide grooves 21a are recessed from both side surfaces (surfaces facing +Y side and -Y side) of the second main body portion 21 toward the inner side in the parallel direction Y. The guide grooves 21a extend linearly from an end portion on the distal end side of the second main body portion 21 toward the base end side. A locking hole 21b is formed on an inner surface of each of the guide grooves 21a. The locking holes 21b penetrate the second main body portion 21 in the parallel direction Y. The locking holes 21b extend in the longitudinal direction Z on the inner side of the guide grooves 21a.

In a state where the first housing 10 and the second housing 20 are combined, the locking portions 16 of the first housing 10 enter the guide grooves 21a of the second housing 20. Further, the locking protrusions 16a enter the locking holes 21b. In a case where the first housing 10 and the second housing 20 move relative to one another in the longitudinal direction Z, the locking portions 16 and the guide grooves 21a slide. With the locking protrusions 16a being inside the locking holes 21b, movement of the first housing 10 relative to the second housing 20 toward a distal end side beyond a predetermined range is restricted.

As shown in FIG. 5, the pressing portion 22 includes two protrusions 22a.
Similarly, each of the pressing portions 23 to 25 includes two protrusions 23a to 25a. In other words, the pressing portion 23 includes two protrusions 23a, the pressing portion 24 includes two protrusions 24a, and the pressing portion 25 includes two protrusions 25a. The pressing portions 22 to 25 protrude from a lower end portion (-X side end portion) of the second main body portion 21 to an upper side (+X side). The number of the pressing portions 22 to 25 is equal to the number of the connectors 100 included in the connector 2 with the auxiliary tool. In the present embodiment, the number of each of the pressing portions 22 to 25 and the connectors 100 is four. Hereinafter, the four pressing portions may be referred to as a "first pressing portion 22", a "second pressing portion 23", a "third pressing portion 24", and a "fourth pressing portion 25", respectively. Positions of the pressing portions 22 to 25 in the longitudinal direction Z differ from one another. The third pressing portion 24 is located closest to the distal end side. The second pressing portion 23 is located second closest to the distal end side, and the second pressing portion 23 is located third closest to the distal end side. The fourth pressing portion 25 is located closest to the base end side.

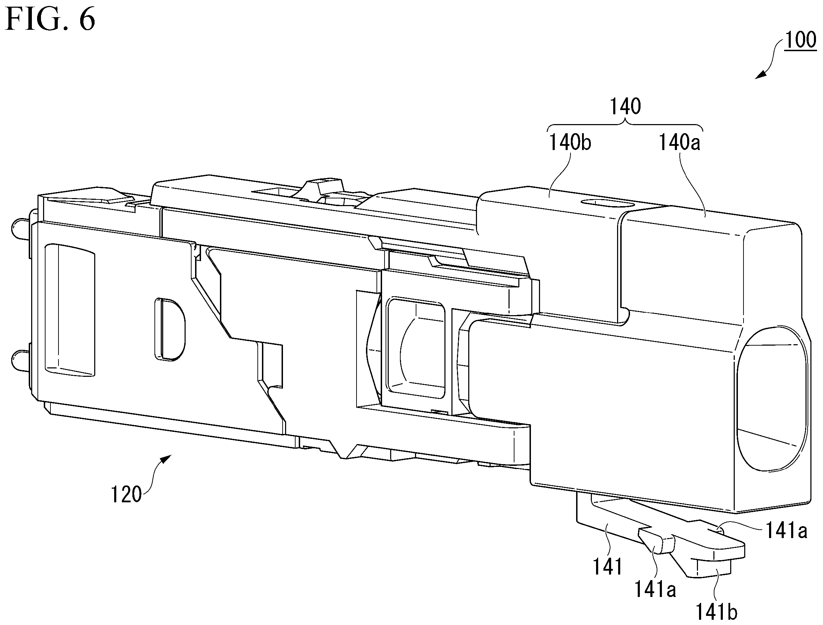

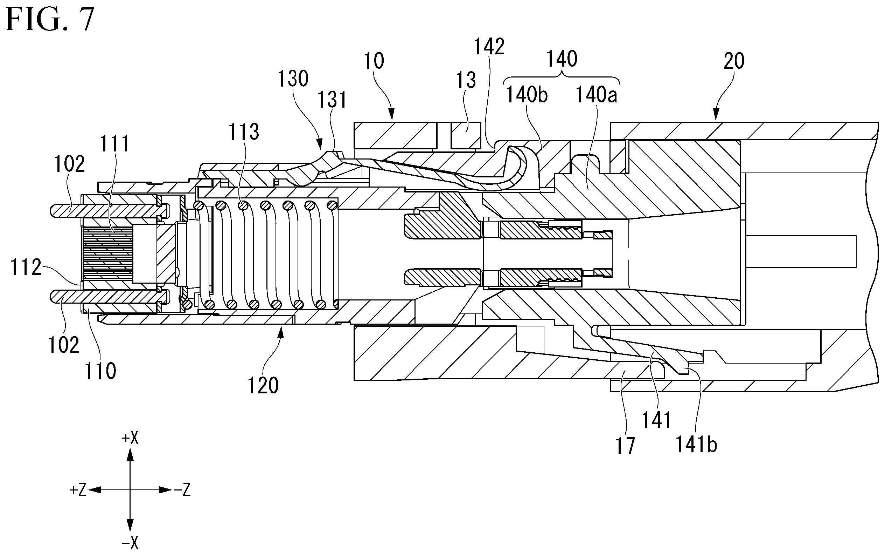

As shown in FIGS. 6 and 7, each of the connectors 100 includes a ferrule 110, a housing 120, an engagement protrusion 131, and a boot 140. The connector 100 according to the present embodiment is a male-side connector and includes two positioning pins 102. The positioning pins 102 are inserted, inside the adapter 3, into positioning holes of ferrules included in female-side connectors (not shown). As a result, the positions of the two connectors match. The plurality of connectors 100 included in the connector 2 with the auxiliary tool may be a female-side connector. That is, the connector 100 may not include the positioning pins 102.

As shown in FIG. 7, the ferrule 110 includes a plurality of fiber holes 111. An optical fiber (not shown) is inserted into the fiber holes 111. The optical fiber includes a glass portion and a coating layer that covers the glass portion. A biasing member 113 that biases the ferrule 110 is disposed inside the housing 120. The biasing member 113 is, for example, a coil spring. The ferrule 110 includes the connection end surface 112 on which the optical fiber is exposed. The connection end surface 112 abuts a connection end surface of another connector inside the adapter 3 by a biasing force of the biasing member 113. As a result, the two connectors are optically connected.

As shown in FIG. 7, the connector 100 includes an elastic piece 130. The elastic piece 130 includes the engagement protrusion 131. However, the engagement protrusion 131 may be a part of another member (the housing 120, the boot 140, and the like) included in the connector 100. The elastic piece 130 is formed of a plate spring, for example, and possesses elasticity. The engagement protrusion 131 enters an inside of an engagement hole 3c (see FIG. 8) of the adapter 3 and has a function of engaging the connector 100 with the adapter 3. The boot 140 includes two members (a boot body 140a and a movable member 140b). A holding space that holds the elastic piece 130 is formed inside the movable member 140b.

As shown in FIG. 6, the boot 140 includes a contact piece 141. The contact piece 141 is formed at a lower end portion of the boot body 140a. The contact piece 141 protrudes downward from a lower surface of the boot body 140a and extends to the base end side. The contact piece 141 is elastically deformable in the up-down direction X with a connection portion (an end portion on the distal end side of the contact piece 141) with the boot body 140a as a base point. The contact piece 141 includes two first contact portions 141a and one contact release portion 141b. The first contact portions 141a protrude from the contact piece 141 toward both sides in the parallel direction Y. The contact release portion 141b protrudes downward from the contact piece 141.

The two first contact portions 141a face the pressing portions 22 to 25 (see FIG. 5) corresponding to the connectors 100A to 100D in the longitudinal direction Z. For example, the two first contact portions 141a of the first connector 100A face the two protrusions 22a of the first pressing portion 22. In a case of performing the connection work, the pressing portions 22 to 25 abut the first contact portions 141a, so that the connectors 100A to 100D are pushed towards the adapter 3. The contact release portion 141b faces the engagement release portion 17 in the longitudinal direction Z. A surface of the contact release portion 141b facing the engagement release portion 17 is inclined to face the distal end side as the upper side is approached. A function of the contact release portion 141b is described below.

As shown in FIG. 7, the boot 140 of each of the connectors 100 includes a second contact portion 142. The second contact portion 142 is provided at an upper end portion of the boot 140. The second contact portions 142 face the release portions 14a to 14d in the longitudinal direction Z.

Next, an operation of the auxiliary tool 1 and the connector 2 with the auxiliary tool configured as described above is described with reference to FIG. 8 and the like. In FIG. 8, only one adapter 3 is displayed, but in an actual data center or the like, a large number of adapters 3 are densely arranged on the patch panel. In addition, in FIG. 8, the connector on the other side is not displayed, but the connector on the other side may be connected to the adapter 3 from the second insertion port 3b.

### <Connection Work>

In a case where the connection work is performed, as shown in FIG. 8, the connector 2 with the auxiliary tool approaches the adapter 3. More specifically, the second housing 20 is gripped, which causes the plurality of connectors 100 to enter the first insertion port 3a of the adapter 3. In a case where the connector 100 enters the first insertion port 3a up to a certain extent, the first housing 10 abuts the adapter 3. Further, in a case where the second housing 20 is pushed towards the adapter 3, the second housing 20 moves to a distal end side (+Z side) relative to the first housing 10. In this case, the locking portions 16 and the guide grooves 21a slide, and the relative movement of the first housing 10 and the second housing 20 is guided.

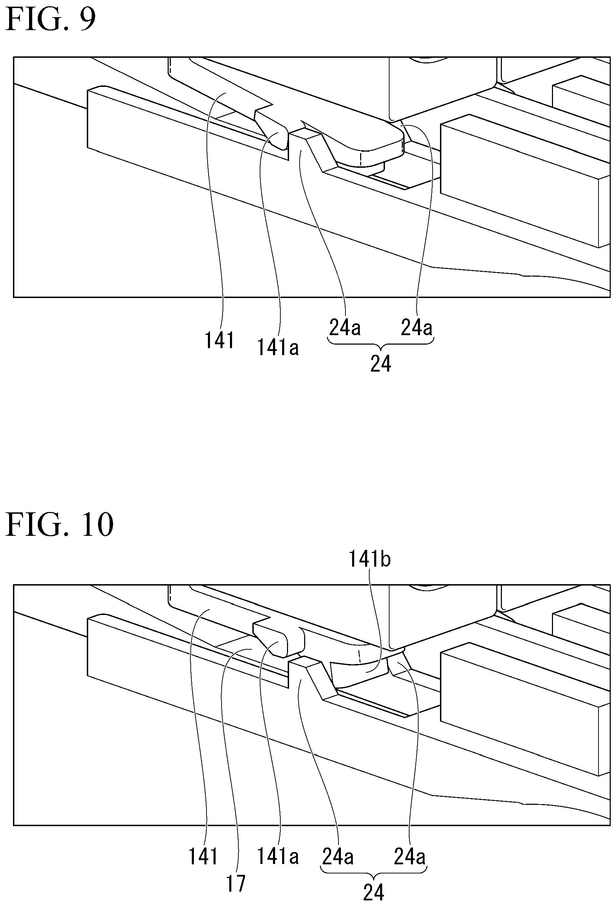

As the second housing 20 and the first housing 10 move relative to one another, the protrusion 24a of the third pressing portion 24 (see FIG. 5) located closest to the distal end side among the plurality of pressing portions 22 to 25 abuts the first contact portion 141a (see FIG. 6) of the third connector 100C first. FIG. 9 shows a state where the protrusion 24a and the first contact portion 141a are in contact with one another. Further, in a case where the second housing 20 is pushed, a force toward the distal end side is transmitted to the connector 100 via the first contact portion 141a. At this point, the first pressing portion 22, the second pressing portion 23, and the fourth pressing portion 25 are separated from the first contact portions 141a of the connectors 100A, 100B, and 100D. That is, only the third pressing portion 24 presses the third connector 100C toward the distal end side. Therefore, an operation force applied to the second housing 20 by the user is substantially the same as a force in a case of pushing one connector 100 into the adapter 3.

In a case where the third pressing portion 24 pushes the third connector 100C by a predetermined amount, the engagement protrusion 131 of the third connector 100C is engaged with the engagement hole 3c of the adapter 3. As a result, the connection between the third connector 100C and the adapter 3 is completed. In a case where the user further pushes the second housing 20, the engagement release portion 17 abuts the contact release portion 141b, so that the contact piece 141 is elastically deformed to the +X side (see FIG. 10). As a result, the contact between the third pressing portion 24 and the first contact portion 141a is released.

After that, the user continues to push the second housing 20 towards the adapter 3. As a result, the second pressing portion 23 located second closest to the distal end side out of the plurality of pressing portions 22 to 25 abuts the first contact portion 141a of the second connector 100B. The engagement protrusion 131 and the engagement hole 3c are then engaged with one another by the second pressing portion 23 pushing the second connector 100B. In addition, the contact between the second pressing portion 23 and the first contact portion 141a of the second connector 100B is released by the action of the corresponding engagement release portion 17.

After that, the fourth pressing portion 25 and the first pressing portion 22 also sequentially push the corresponding fourth connector 100D and first connector 100A towards the distal end side. That is, by one operation of pushing the second housing 20, the four connectors 100 can be collectively connected to the adapter 3. In addition, in a case where the four connectors 100 are connected to the adapter 3 at the same time, the required operation force is four or more times the operation force in a case where one connector 100 is connected to the adapter 3. However, in the present embodiment, the plurality of pressing portions 22 to 25 connect each of the connectors 100 to the adapter 3 at different times. Therefore, the operation force required in the collective connection work is reduced.

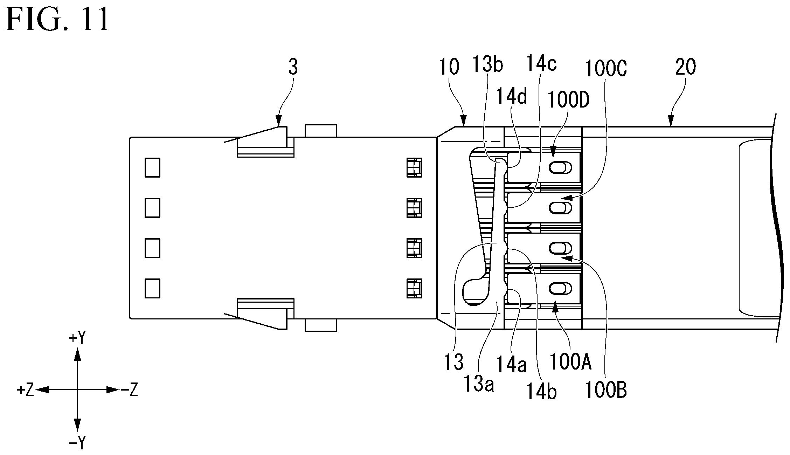

Next, the disconnection work is described. According to the auxiliary tool 1 of the present embodiment, the plurality of connectors 100 can be collectively disconnected from the adapter 3.
Specifically, as shown in FIG. 11, the second housing 20 is pulled to the base end side (-Z side) from a state in which the plurality of connectors 100 are connected to the adapter 3. In a case where the second housing 20 moves to the base end side with respect to the first housing 10, the locking protrusion 16a of the first housing 10 reaches an end portion on the distal end side of the locking hole 21b in the second housing 20, and a force toward the base end side is transmitted to the first housing 10. In a case where the first housing 10 moves to the base end side, the release portions 14a to 14d abut the second contact portions 142 of the connectors 100.

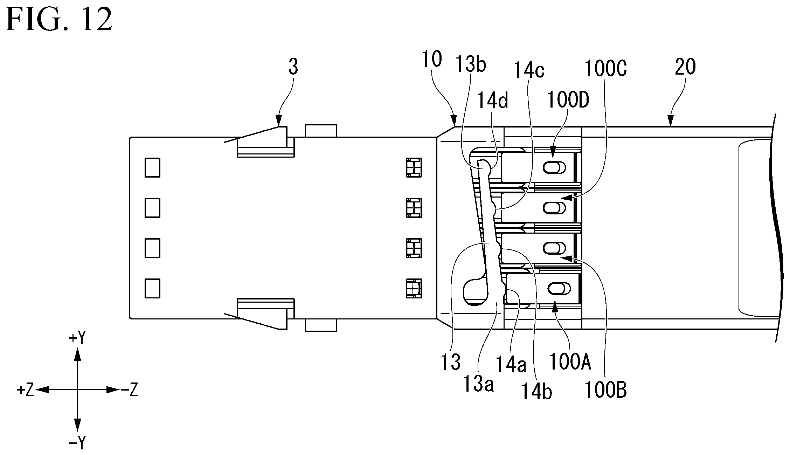

Further, in a case where the first housing 10 moves to the base end side, as shown in FIG. 12, the swing portion 13 swings in a direction in which the distal end portion 13b is separated from the fourth connector 100D (the second contact portion 142 of the fourth connector 100D). As a result, the release portions 14b to 14d do not abut the connectors 100B to 100D, and only the first release portion 14a abuts the second contact portion 142 of the first connector 100A. Therefore, the operation force required in a case where the user pulls the second housing 20 is substantially the same as the force needed to remove one first connector 100A only from the adapter 3.

Here, the swing portion 13 is elastically deformed in a case of swinging around the swing center 13a. In a case where the swing portion 13 is elastically deformed in this way, a moment acts on the swing portion 13 to swing the swing portion 13 in a direction in which the connectors 100A to 100D are removed from the adapter 3 is generated.

In a case where the user further pulls the second housing 20, the first connector 100A, in which the second contact portion 142 is pressed by the first release portion 14a, is removed from the adapter 3. In this case, the engagement protrusion 131 of the first connector 100A is disengaged from the engagement hole 3c of the adapter 3, so that the force toward the base end side applied from the first release portion 14a to the first connector 100A is released. In other words, a reaction force received from the first connector 100A by the first release portion 14a is also released. Since the moment continues to act on the swing portion 13, the swing portion 13 swings around the swing center 13a, and the second release portion 14b abuts the second contact portion 142 of the second connector 100B.

The second release portion 14b also removes the second connector 100B from the adapter 3 by the same action as the first release portion 14a. Then, the reaction force received from the second connector 100B by the second release portion 14b is also released, and the swing portion 13 swings around the swing center 13a, and the third release portion 14c abuts the second contact portion 142 of the third connector 100C. After that, the same action is repeated, and the third connector 100C and the fourth connector 100D are also removed from the adapter 3.

Using one operation of pulling the second housing 20, it is possible to collectively disconnect the four connectors 100 from the adapter 3. In addition, in a case where the four connectors 100 are disconnected from the adapter 3 at the same time, the required operation force is four or more times the operation force, compared to a case where one connector 100 is disconnected from the adapter 3. However, in the present embodiment, the plurality of release portions 14a to 14d disconnect each of the connectors 100 from the adapter 3 at different times. Therefore, the operation force required in the collective disconnection work is reduced.

As described above, the auxiliary tool 1 according to the present embodiment is used to connect the plurality of connectors 100 to the adapter 3. The auxiliary tool 1 includes the first housing 10 and the second housing 20 that is movable relative to the first housing 10. The first housing 10 includes the first opening 11 that is open towards the adapter 3 and through which distal ends of the plurality of connectors 100 protrude towards the adapter 3, the second opening 12 that is open toward the second housing 20, and the swing portion 13 that is swingable. The swing portion 13 includes the plurality of release portions 14a to 14d that come into contact with the contact portions (second contact portions) 142 of the plurality of connectors 100A to 100D, respectively, in a case where the first housing 10 is separated from the adapter 3, and the plurality of release portions 14a to 14d are disposed side by side in the parallel direction Y. The swing center 13a of the swing portion 13 is located at an end portion of the swing portion 13 in the parallel direction Y, and in a case where the distal end portion 13b of the swing portion 13 swings in a direction in which the distal end portion 13b is separated from the contact portion (second contact portion) 142 of the connector 100, a moment acts on the swing portion 13 to swing the swing portion 13 in a direction where the connector 100 is removed from the adapter 3.

According to the auxiliary tool 1, the plurality of connectors 100A to 100D can be collectively connected to and disconnected from the adapter 3. In addition, the plurality of connectors 100 can be removed from the adapter 3 one by one in order by using the plurality of release portions 14a to 14d formed in the swing portion 13. Therefore, it is possible to reduce the required operation force as compared with a case where the plurality of connectors 100 are removed from the adapter 3 at the same time.

In addition, the swing portion 13 is integrally molded with the first housing 10. Therefore, for example, the number of components can be reduced as compared with a case where the swing portion 13 is separate from the first housing 10.

In addition, the plurality of release portions 14a to 14d protrude from the swing portion 13 toward the second housing 20. As a result, a force toward the base end side is easily transmitted from the release portions 14a to 14d to the connectors 100A to 100D. Therefore, the connectors 100A to 100D can be more smoothly removed.

In addition, the second housing 20 includes the plurality of pressing portions 22 to 25 that press the plurality of connectors 100A to 100D towards the adapter 3, and positions of the plurality of pressing portions 22 to 25 are different from one another in a direction (longitudinal direction Z) in which the first housing 10 and the second housing 20 move relative to one another. As a result, it is possible to press each of the connectors 100A to 100D against the adapter 3 at different times. Therefore, it is possible to reduce the maximum value of the operation force compared to a case where the plurality of connectors is pressed at the same time.

In addition, the first housing 10 includes the plurality of engagement release portions 17 that release contact between the plurality of pressing portions 22 to 25 and the plurality of connectors 100A to 100D. As a result, it is possible to avoid having the pressing force from continuously act on the connector 100, in which the connection to the adapter 3 is complete.

The technical scope of the present invention is not limited to the aforementioned embodiment, and it is possible to have various changes be made within the scope of the present invention without departing from the spirit of the present invention.

For example, the swing portion 13 may be formed separately from the first housing 10. In addition, the moment acting on the swing portion 13 may be generated by a means other than the elastic deformation of the swing portion 13. For example, a twisting coil spring or the like may be attached to the swing portion 13 that is separate from the first housing 10 to generate the moment.

In addition, it is possible to appropriately replace the components in the embodiment with well-known components within the scope of the present invention, and the embodiment and the modification example may be appropriately combined.

### Reference Signs List

1...Auxiliary Tool, 2...Connector, 3...Adapter, 10...First Housing, 11...First Opening, 12...Second Opening, 13...Swing Portion, 13a...Swing Center, 13b...Distal End Portion, 14a to 14d...Release Portion, 17...Engagement Release Portion, 20...Second Housing, 22 to 25...Pressing Portion, 100, 100A to 100D...Connector, Y...Parallel Direction

## Claims

1. An auxiliary tool that is used to connect a plurality of connectors to an adapter, the auxiliary tool comprising:
a first housing; and
a second housing configured to move relative to the first housing,
wherein the first housing includes
a first opening that is open towards the adapter and through which distal ends of the plurality of connectors protrude towards the adapter,
a second opening that is open towards the second housing, and
a swing portion that is swingable,
the swing portion includes a plurality of release portions that come into contact with contact portions of the plurality of connectors, respectively, in a case where the first housing is separated from the adapter,
the plurality of release portions are disposed side by side in a parallel direction,
a swing center of the swing portion is located at an end portion of the swing portion in the parallel direction, and
in a case where the swing portion swings in a direction in which a distal end portion of the swing portion is separated from the contact portions of the connectors, a moment acts on the swing portion to swing the swing portion in a direction in which the connectors are removed from the adapter.

2. The auxiliary tool according to Claim 1, wherein
the swing portion is integrally molded with the first housing.

3. The auxiliary tool according to Claim 1 or 2, wherein
the plurality of release portions protrude from the swing portion toward the second housing.

4. The auxiliary tool according to Claim 1 or 2, wherein
the second housing includes a plurality of pressing portions configured to press the plurality of connectors towards the adapter, and
positions of the plurality of pressing portions are different from one another in a direction in which the first housing and the second housing move relative to one another.

5. The auxiliary tool according to Claim 4, wherein
the first housing includes a plurality of engagement release portions configured to release contact between the plurality of pressing portions and the plurality of connectors.
